# EUROPEAN PATENT APPLICATION

(11) **EP 2 642 634 A2**
(43) Date of publication of application: **25.09.2013**
(21) Application number: 12188915.8
(22) Date of filing: 18.10.2012
(51) Int. Cl.: H02K 1/27

(54) **Rotor for rotating electrical machine**

(30) Priority: 19.03.2012 JP 2012061829
(71) Applicant: Kabushiki Kaisha Yaskawa Denki, Kitakyushu-Shi Fukuoka 806 (JP)
(72) Inventor: Koga, Mitsuhiro, Kitakyushu-shi, Fukuoka 806-0004 (JP); Nakazono, Kensuke, Kitakyushu-shi, Fukuoka 806-0004 (JP)
(74) Representative: Grünecker, Kinkeldey, Stockmair & Schwanhäusser

(57) **Abstract**

A rotor (10) according to an embodiment includes a cylindrical rotor core (11) in which a plurality of magnet embedding grooves (2) are radially arranged, ferrite magnets (3), and samarium-based magnets. The ferrite magnets (3) and the samarium-base magnets are arranged in juxtaposition in a radial direction in the magnet embedding grooves (2) provided on the rotor (10).

## Description

### FIELD

The embodiments discussed herein are directed to a rotor and a rotating electrical machine.

### BACKGROUND

Conventionally, as one of the rotors used in rotating electrical machines, there is a so-called permanent magnet embedded rotor in which permanent magnets are disposed in a rotor core so that pole faces are formed on the outer circumference of the rotor core.

In such a permanent magnet embedded rotor, to obtain desired magnetic properties, sintered rare-earth magnets of strong magnetic force are typically used as the permanent magnets. Moreover, to further improve magnetic properties, a rotor in which such sintered rare-earth magnets and rare-earth bonded magnets are disposed in combination is known.

The documents concerning the above-described conventional art include, for example, Japanese Patent Application Laid-open No. 2009-112121.

However, in conventional rotors including the one disclosed in the above-described Japanese Patent Application Laid-open No. 2009-112121, the magnets used are rare-earth magnets using extremely expensive neodymium (Nd) regardless of whether they are sintered magnets or bonded magnets. In addition, because the rare-earth magnets using neodymium (Nd) require more expensive dysprosium (Dy) to maintain temperature characteristics, it is difficult to achieve a reduction in cost.

In view of the above, one aspect of embodiments aims to provide a rotor and a rotating electrical machine in which desired magnetic properties can be obtained despite being low in cost.

### SUMMARY

A rotor according to an aspect of an embodiment includes: a cylindrical rotor core in which a plurality of magnet embedding grooves are radially arranged; and ferrite magnets and samarium-based magnets arranged in juxtaposition in a radial direction in the magnet embedding grooves.

One aspect of the embodiments provides a rotor and a rotating electrical machine in which desired magnetic characteristics can be obtained while inexpensive ferrite magnets are used.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:

FIG. 1 is an explanatory diagram schematically illustrating a configuration of a motor (rotating electrical machine) according to a first embodiment;

FIG. 2 is an explanatory diagram of a rotor in the first embodiment;

FIG. 3 is an explanatory diagram of magnet embedding grooves provided on a rotor core;

FIG. 4 is an explanatory diagram of a motor (rotating electrical machine) according to a first modification example of the first embodiment;

FIG. 5 is an explanatory diagram of a motor (rotating electrical machine) according to a second modification example of the first embodiment;

FIG. 6 is an explanatory diagram of a motor (rotating electrical machine) according to a second embodiment;

FIG. 7 is an explanatory diagram of a motor (rotating electrical machine) according to a first modification example of the second embodiment; and

FIG. 8 is an explanatory diagram of a motor (rotating electrical machine) according to a second modification example of the second embodiment.

### DESCRIPTION OF EMBODIMENTS

A rotor according to embodiments includes a cylindrical rotor core in which a plurality of magnet embedding grooves are radially arranged, and ferrite magnets and samarium-based magnets arranged in juxtaposition in a radial direction in a stacked manner in the magnet embedding grooves.

With reference to the accompanying drawings, embodiments of a rotor and a motor as a rotating electrical machine provided with the rotor disclosed in the present application will be described in detail hereinafter. However, the present invention is not intended to be restricted by exemplification in the following embodiments.

### First Embodiment

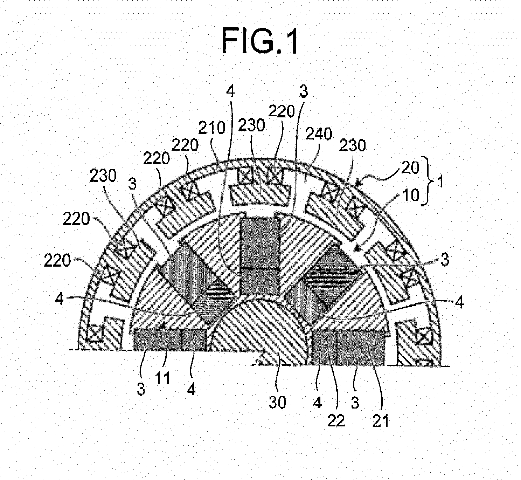

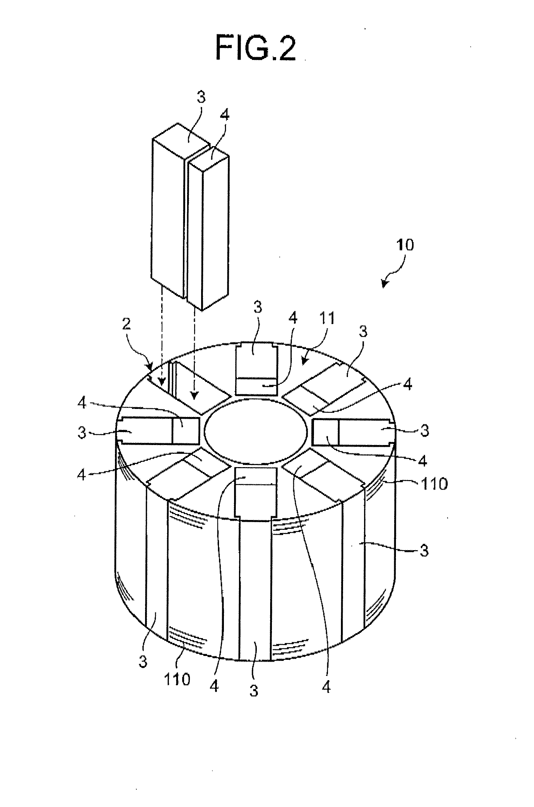

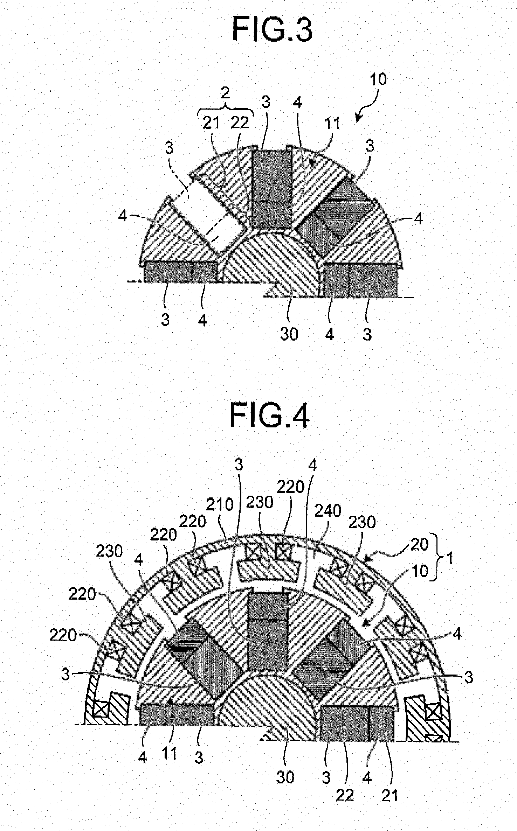

FIG. 1 is an explanatory diagram schematically illustrating a configuration of a motor 1 as a rotating electrical machine according to a first embodiment. FIG. 2 is an explanatory diagram of a rotor 10 of the motor 1. FIG. 3 is an explanatory diagram of magnet embedding grooves 2 provided on a rotor core 11. In FIGS. 1 and 3, one half of the whole is schematically illustrated in a planar sectional view.

The motor 1 in the first embodiment includes, as illustrated in FIG. 1, the cylindrical rotor 10 and a tubular stator 20 disposed opposite to the outer circumferential surface of the rotor 10 with a given gap.

In the stator 20, a stator core 210 composed of a laminated core in which a plurality of magnetic steel sheets are laminated is shrink-fitted on a frame (not depicted) formed in a roughly tubular form. On the stator core 210, coils 220 are wound and coil ends thereof are molded by resin. On an inner circumferential side of the stator core 210, a plurality of teeth 230 projecting towards a radial center are formed along a circumferential direction, and in slots 240 formed between the teeth 230, the coils 220 are housed.

The rotor 10 includes, as illustrated in FIG. 2, the cylindrical rotor core 11 in which the magnet embedding grooves 2 are radially arranged, a rotation spindle 30 (see FIG. 1) fitted to the rotor core 11 by insertion, and permanent magnets disposed in the magnet embedding grooves 2. The rotor core 11 is formed of a laminated core in which a plurality of annularly formed magnetic steel sheets 110 are laminated, and is formed with the magnet embedding grooves 2 in a uniformly spaced manner in a circumferential direction.

Typically, as the rotor 10 of the motor 1, neodymium (Nd) magnets of high magnetic performance yet extremely expensive are used, while ferrite magnets 3 which are inferior in performance are almost never used even though they are inexpensive. However, in the first embodiment, the motor 1 (rotating electrical machine) that exercises desired magnetic performance and is advantageous in terms of cost is realized by daringly using the ferrite magnets 3.

More specifically, the ferrite magnets 3 are not used single-handedly, but the ferrite magnets 3 and samarium-based magnets that are one type of rare-earth magnets are combined and disposed in the rotor 10 in a predetermined form.

In the first embodiment, as the samarium-based magnets, samarium-iron-nitrogen magnets (Sm-Fe-N magnets) 4 that have roughly equivalent magnetic performance to that of neodymium magnets but are less expensive than the neodymium magnets are used. The ferrite magnets 3 and the samarium-iron-nitrogen magnets 4 are then configured to be arranged in juxtaposition in a radial direction and in a manner firmly attached to each other in the magnet embedding grooves 2.

The ferrite magnets 3 and the samarium-iron-nitrogen magnets 4 are, as illustrated in FIG. 2, formed in the shape of a bar extending in an axial direction of the rotor core 11. The samarium-iron-nitrogen magnets 4 are bonded magnets having flexibility with rubber and resin such as plastic as binder. Meanwhile, the ferrite magnets 3 are sintered magnets formed by powder sintering. However, the ferrite magnets 3 may be bonded magnets as the same as the samarium-iron-nitrogen magnets 4.

The magnet embedding grooves 2 include, as illustrated in FIG. 3, first areas 21 and second areas 22 divided in the radial direction of the rotor core 11. The first area 21 and the second area 22 are both in a rectangular shape the width of which along the circumferential direction is nearly equal and the entire shape of the magnet embedding groove 2 is in a roughly rectangular shape with long sides in the radial direction.

In the first embodiment, the ferrite magnets 3 are disposed in the first areas 21 positioned on the outer circumferential side of the rotor core 11, and the samarium-iron-nitrogen magnets 4 of relatively high performance are disposed in the second areas 22 positioned on the inner circumferential side of the rotor core 11.

In comparison with the ferrite magnets 3 and the samarium-iron-nitrogen magnets 4, in terms of cost, the ferrite magnets 3 are quite inexpensive, while the samarium-iron-nitrogen magnets 4 are relatively expensive. Meanwhile, in terms of performance, when expressed in maximum energy product that is one of the indices to represent performance, the ferrite magnets 3 have maximum energy products of 4 to 5 MegaGauss Oersted (MGOe), while the samarium-iron-nitrogen magnets 4 have those of 12 to 14 MegaGauss Oersted.

In the relationship of dimensional factors of permanent magnets and motor characteristics when providing the permanent magnets to the rotor 10, it is known that the lengths of permanent magnets in the radial direction in the rotor core 11 are strongly related to the motor characteristics.

Therefore, the respective lengths of the ferrite magnet 3 and the samarium-iron-nitrogen magnet 4 in the radial direction in the rotor core 11 are determined in consideration of respective performance and cost-effectiveness of the ferrite magnet 3 and the samarium-iron-nitrogen magnet 4 so that the desired motor characteristics within an acceptable range can be obtained.

In the rotor 10 in the first embodiment, as illustrated in FIGS. 1 to 3, the dimension (length in the radial direction in the rotor core 11) of the samarium-iron-nitrogen magnet 4 of relatively high performance is made to be roughly one half of that of the ferrite magnet 3. Even with such a dimensional ratio, the desired motor characteristics can be obtained.

In this case, naturally, the collective size of magnets, in other words, the total amount of magnets used is significantly smaller for the samarium-iron-nitrogen magnets 4, which is expensive, than that for the ferrite magnets 3. Accordingly, an increase in cost can be suppressed as much as possible.

Furthermore, in the rotor 10 in the first embodiment, the samarium-iron-nitrogen magnets 4 are disposed in the second areas 22 formed on the inner circumferential side of the rotor core 11.

More specifically, because the samarium-iron-nitrogen magnet 4 has strong magnetic characteristics and an extremely strong magnetic force, care needs to be taken in handling near the magnetic material. In that respect, because the samarium-iron-nitrogen magnet 4 is a bonded magnet, it is possible, for example, to use the magnet embedding groove 2 formed in the rotor core 11 as a mold. In other words, the samarium-iron-nitrogen magnet 4 can be injection molded by casting the material of magnetic powder primarily consisting of samarium-iron-nitrogen mixed with binding resin into the second area 22.

### First Modification Example

FIG. 4 is an explanatory diagram of the motor (rotating electrical machine) 1 according to a first modification example. As illustrated in FIG. 4, the samaxium-iron-nitrogen magnets 4 are disposed in the first areas 21 positioned on the outer circumferential side of the rotor core 11 and the ferrite magnets 3 are disposed in the second areas 22 positioned on the inner circumferential side of the rotor core 11. Even when the rotor 10 according to the first modification example is used, the desired motor characteristics can be obtained.

In regard to the length in the radial direction in the rotor core 11, the ferrite magnets 3 of low magnetic characteristics are made long. More specifically, in the second areas 22 positioned on the inner circumferential side of the rotor core 11, the ferrite magnets 3 the long sides of which are relatively long are disposed.

Consequently, as can be appreciated from FIGS. 1 and 4, either the ferrite magnet 3 or the samarium-iron-nitrogen magnet 4 may be disposed on the inner circumferential side or on the outer circumferential side in the magnet embedding groove 2 in the radial direction.

In the first modification example, the samarium-iron-nitrogen magnets 4 that are difficult to handle are disposed in the first areas 21 formed on the outer circumferential side of the rotor core 11. Therefore, even after the samarium-iron-nitrogen magnets 4 are formed in the shape of a bar, there is no great difficulty in attaching them to the rotor core 11.

In the above-described embodiment, the samarium-iron-nitrogen magnet 4 is used as the samarium-based magnet to be combined with the ferrite magnet 3. Accordingly, as illustrated in FIGS. 1 to 4, both the first areas 21 and the second areas 22 of the magnet embedding grooves 2 can be made in rectangular shapes the widths of which along the circumferential direction are roughly equal, whereby the magnet embedding grooves 2 can be easily formed.

### Second Modification Example

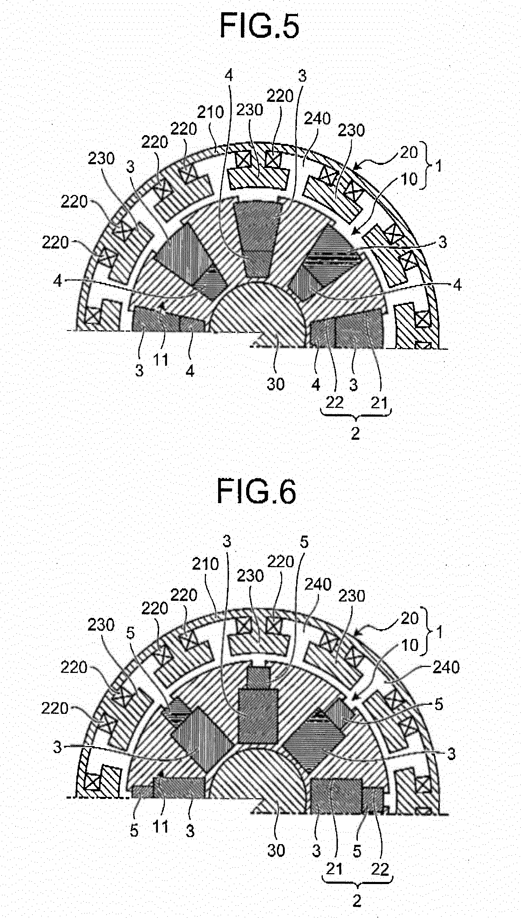

FIG. 5 is an explanatory diagram of the motor (rotating electrical machine) 1 according to a second modification example. As illustrated in FIG. 5, the magnet embedding grooves 2 are formed in a roughly sector form, the ferrite magnets 3 are disposed in the relatively wide first areas 21 positioned on the outer circumferential side of the rotor core 11, and the samarium-based magnets are disposed in the relatively narrow second areas 22 positioned on the inner circumferential side of the rotor core 11.

More specifically, the magnet embedding groove 2 includes the first area 21 and the second area 22 that are divided in the radial direction of the rotor core 11 and the widths thereof along the circumferential direction are different from each other. The ferrite magnet 3 is disposed in the relatively wide first area 21 and the samarium-based magnet is disposed in the relatively narrow second area 22. Even when the rotor 10 according to the second modification example is used, the desired motor characteristics can be obtained.

While the relatively wide first areas 21 are formed on the outer circumferential side of the rotor core 11 and the relatively narrow second areas 22 are formed on the inner circumferential side of the rotor core 11, the arrangement of the first areas 21 and the second areas 22 can be reversed.

As for the samarium-based magnet, as illustrated in FIG. 5, the above-described samarium-iron-nitrogen magnet 4 can be used, or as described later, a samarium-cobalt magnet (Sm-Co magnet) that is said to have a magnetic force next to a neodymium magnet can be used.

In the second modification example, the width along the circumferential direction is narrower for the samarium-based magnets than that for the ferrite magnets 3, whereby a significant increase in cost can be prevented.

### Second Embodiment

Next, with reference to FIG. 6, the motor 1 and the rotor 10 according to a second embodiment will be explained. FIG. 6 is an explanatory diagram of the motor 1 in the second embodiment. In the following, the same constituent elements as those in the foregoing embodiment are given with the same reference symbols and their detailed explanations are omitted.

With the motor 1 in the second embodiment and the motor 1 in the first embodiment, the configuration of the stator 20 is the same for the both, but the configuration of the rotor 10 is different from each other.

More specifically, as the samarium-based magnets, samarium-cobalt magnets (Sm-Co magnets) 5 are used in place of the samarium-iron-nitrogen magnets 4.

As illustrated in FIG. 6, the relatively wide first areas 21 are formed on the inner circumferential side of the rotor core 11, and the relatively narrow second areas 22 are formed on the outer circumferential side of the rotor core 11. The ferrite magnets 3 are disposed in the wide first areas 21 formed on the inner circumferential side of the rotor core 11, while the samarium-cobalt magnets (Sm-Co magnets) 5 are disposed in the relatively narrow second areas 22 formed on the outer circumferential side of the rotor core 11. More specifically, in the magnet embedding groove 2, the ferrite magnet 3 is disposed on the inner circumferential side and the samarium-cobalt magnet 5 is disposed on the outer circumferential side in juxtaposition in a manner firmly attached to each other.

The samarium-cobalt magnet 5, as in the foregoing, is said to have a magnetic force next to a neodymium magnet, and when expressed in maximum energy product, has a maximum energy product of about 32 MegaGauss Oersted. Consequently, the magnetic loading as the rotor 10 is increased, and thus the motor 1 of small and lightweight can be realized.

Moreover, the samarium-cobalt magnet 5 excels a neodymium magnet in temperature characteristics. Accordingly, the rotor 10 in the second embodiment and the motor 1 using the rotor 10 can sufficiently withstand the use in a high-temperature environment.

Furthermore, as illustrated in FIG. 6, in the rotor 10 in the second embodiment, the dimension (length in the radial direction of the rotor core 11) of the samarium-cobalt magnet 5 of relatively high performance is made to be roughly one half of that of the ferrite magnet 3. However, the desired motor characteristics can be obtained.

Moreover, in this case, because the width along the circumferential direction is narrower for the samarium-cobalt magnet 5 than that for the ferrite magnet 3, the collective size of the magnets, i.e., the total amount of magnets used is significantly smaller for the expensive samarium-cobalt magnets 5 than that for the ferrite magnets 3. Consequently, an increase in cost can be suppressed as much as possible.

### First Modification Example

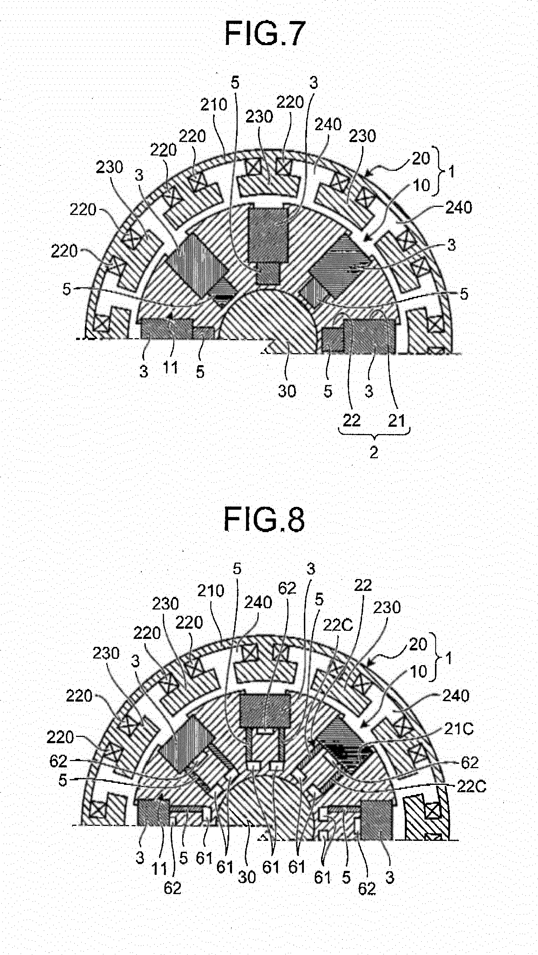

FIG. 7 is an explanatory diagram of the motor 1 (rotating electrical machine) according to a first modification example of the second embodiment. As illustrated in FIG. 7, the ferrite magnets 3 are disposed in the first areas 21 positioned on the outer circumferential side of the rotor core 11 and the samarium-cobalt magnets 5 are disposed in the second areas 22 positioned on the inner circumferential side of the rotor core 11. Even when the rotor 10 according to the first modification example is used, the desired motor characteristics can be obtained.

Consequently, as can be appreciated from FIGS. 6 and 7, even in the combination of the ferrite magnet 3 and the samarium-cobalt magnet 5, either the ferrite magnet 3 or the samarium-cobalt magnet 5 may be disposed on the inner circumferential side or on the outer circumferential side in the magnet embedding groove 2 in the radial direction.

The samarium-cobalt magnets 5 in the form of either sintered magnets or bonded magnets can be used.

### Second Modification Example

FIG. 8 is an explanatory diagram illustrating a motor (rotating electrical machine) according to a second modification example of the second embodiment. The motor 1 in the second modification example is characterized by the configuration of the magnet embedding grooves 2 of the rotor 10.

In other words, as illustrated in FIG. 8, the second areas 22 of the magnet embedding grooves 2 are formed with a pair of a first narrow groove 22C and a second narrow groove 22C opposite to and spaced from each other by a given interval. More specifically, the relatively wide first areas 21 are formed on the outer circumferential side of the rotor core 11, and the relatively narrow second areas 22 are formed on the inner circumferential side of the rotor core 11. The second area 22 is then formed with the first narrow groove 22C and the second narrow groove 22C both being arranged within the width of the first area 21.

By such a configuration, the relatively wide ferrite magnets 3 are positioned on the outer circumferential side of the rotor core 11, and thus the width of the magnetic steel sheets between the ferrite magnets 3 is narrowed. Accordingly, an inductance that increases in response to the width of the magnetic steel sheets can be suppressed. Moreover, as compared with the configuration illustrated in FIG. 6, the distance between the adjacent ferrite magnets 3 can be made long, thereby making the ferrite magnets 3 harder to be subjected to demagnetizing fields, whereby the reduction in ability to withstand demagnetization can be prevented.

Furthermore, in the rotor 10 according to the second modification example, a void portion 61 is formed on the inner circumferential side of the rotor core 11 in each of the first narrow groove 22C and the second narrow groove 22C.

By forming such void portions 61, the leakage of magnetic flux between the first narrow groove 22C and the second narrow groove 22C that are adjacent but not opposite to within the width of the first area 21 can be prevented.

In terms of preventing the leakage of magnetic flux, in the second modification example, in the relatively wide first areas 21 formed on the outer circumferential side of the rotor core 11, second void portions 62 that prevent the leakage of magnetic flux between the ferrite magnets 3 are formed on the inner circumferential side of the rotor core 11. While the shapes of the void portions 61 and the second void portions 62 here are made to be rectangular, their shapes are not restricted.

As in the foregoing, in the second modification example, the ferrite magnets 3 are disposed on the outer circumferential side of the rotor core 11, and the halved and strip formed samarium-cobalt magnets 5 are disposed on the inner circumferential side of the rotor core 11. As a consequence, the amount of the samarium-cobalt magnets 5 used can be reduced while an increase in inductance is suppressed and a given ability to withstand demagnetization is maintained.

In each of the above-described embodiments, when the rotation spindle 30 and a connecting portion of the magnetic steel sheets constituting the rotor core 11 are made of non-magnetic material, the leakage of magnetic flux can be further prevented, whereby further improvement in motor characteristics can be expected.

As explained in the foregoing, with the rotor 10 and the motor 1 according to the above-described embodiments, the desired magnetic properties and motor characteristics can be obtained while the inexpensive ferrite magnets 3 are used.

In the above-described embodiments, the rotating electrical machine is explained as the motor 1. However, the present invention can naturally be applied to a generator.

## Claims

1. A rotor (10) comprising:
a cylindrical rotor core (11) in which a plurality of magnet embedding grooves (2) are radially arranged; and
ferrite magnets (3) and samarium-based magnets arranged in juxtaposition in a radial direction in the magnet embedding grooves (2).

2. The rotor (10) according to claim 1, wherein
the magnet embedding grooves (2) each include a first area (21) and a second area (22) divided in a radial direction of the rotor core (11) and widths of which along a circumferential direction are different from each other,
the ferrite magnets (3) are disposed in the relatively wide first areas (21), and
the samarium-based magnets are disposed in the relatively narrow second areas (22).

3. The rotor (10) according to claim 2, wherein the first areas (21) are formed on an outer circumferential side of the rotor core (11), and the second areas (22) are formed on an inner circumferential side of the rotor core (11).

4. The rotor (10) according to claim 3, wherein the second areas (22) are each composed of a pair of a first narrow groove (22C) and a second narrow groove (22C) opposite to and spaced from each other with a given interval therebetween.

5. The rotor (10) according to claim 4, wherein a void portion (61) is formed on the inner circumferential side of the rotor core (11) in each of the first narrow groove (22C) and the second narrow groove (22C).

6. The rotor (10) according to claim 2, wherein the first areas (21) are formed on an inner circumferential side of the rotor core (11), and the second areas (22) are formed on an outer circumferential side of the rotor core (11).

7. The rotor (10) according to any one of claims 1 to 6, wherein the samarium-based magnets are Sm-Co magnets (5).

8. A rotating electrical machine comprising:
the rotor (10) according to any one of claims 1 to 7; and
a stator (20) disposed opposite to an outer circumferential surface of the rotor (10) with a gap therebetween.
